## Europäisches Patentamt

## European Patent Office

## Office européen des brevets

(19)

(11) Veröffentlichungsnummer: **0 189 490**

**B1**

(12)

# EUROPÄISCHE PATENTSCHRIFT

(45) Veröffentlichungstag der Patentschrift:
**20.07.88**

(21) Anmeldenummer: **85100402.8**

(22) Anmeldetag: **16.01.85**

(51) Int. Cl.⁴: **D 03 D 47/24,** F 16 D 63/00

(54) **Projektilbremse für Webmaschinen.**

(43) Veröffentlichungstag der Anmeldung:
**06.08.86 Patentblatt 86/32**

(45) Bekanntmachung des Hinweises auf die Patenterteilung:
**20.07.88 Patentblatt 88/29**

(84) Benannte Vertragsstaaten:
**CH DE IT LI**

(56) Entgegenhaltungen:
**DE-A-1 675 156**
**FR-A-1 335 840**
**FR-A-2 393 094**
**US-A-3 901 288**

(73) Patentinhaber: **GEBRÜDER SULZER AKTIENGESELLSCHAFT, Zürcherstrasse 9, CH-8401 Winterthur (CH)**

(72) Erfinder: **Steiner, August, Hirschweg 25, CH- 8405 Winterthur (CH)**

(74) Vertreter: **Dipl.- Ing. H. Marsch Dipl.- Ing. K. Sparing Dipl.- Phys.Dr. W.H. Röhl Patentanwälte, Rethelstrasse 123, D-4000 Düsseldorf (DE)**

EP 0 189 490 B1

## Beschreibung

Die Erfindung betrifft eine Projektilbremse für Webmaschinen, mit einer unteren und einer oberen Bremsbacke, die beide mit einem Bremsbelag versehen sind.

Bei den heutigen hohen Eintragsleistungen von Webmaschinen werden die Bremsbeläge stark abgenutzt, so daß ihre Standzeit gering ist. Daher wurde statt des bisher verwendeten verhältnismässig elastischen Vulkollans ein härterer weniger elastischer Kunststoff eingesetzt. Dadurch wurde die Standzeit der Bremsbeläge beträchtlich erhöht, da sie jedoch verhältnismässig unelastisch sind erfährt das Projektil Schläge während des Abbremsens, was dazu führen kann, daß das Projektil den Schußfaden verliert. Durch die Schläge entstehen auch Risse in dem Belag, die zu Bruch führen können.

Der Erfindung liegt die Aufgabe zugrunde eine Projektilbremse der eingangs definierten Art zu schaffen, deren Bremsbeläge lange Standzeiten aufweisen. Diese Aufgabe wird erfindungsgemäß durch die im Kennzeichen des Anspruchs 1 angegebenen Merkmale gelöst. Die Unteransprüche betreffen vorteilhafte Weiterbildungen.

Zwei Ausführungsbeispiele des Erfindungsgegenstandes sind nachfolgend anhand der Zeichnung beschrieben. Es ist:

Fig. 1 eine Vorderansicht einer Projektilbremse gemäß der Erfindung;

Fig. 2 eine abgewandelte Ausführungsform.

Die Projektilbremse 1 umfasst eine obere Bremsbacke 2 und eine untere Bremsbacke 3. Die obere Bremsbacke 2 ist mit einem Bremsbelag 4 versehen, die untere Bremsbacke 3 ist mit einem Bremsbelag 5 versehen. Der Bremsbelag 5 besteht aus einer Trägerplatte 6, z. B. einer Metallplatte, einer Bremsplatte 7 und einer Dämpfungsplatte 8. Die Bremsplatte 7 ist auf der einem Projektil 9 zugekehrten Seite 6' auf der Trägerplatte 6 befestigt. Die Dämpfungsplatte 8 ist auf der der unteren Bremsbacke 3 zugekehrten Seite 6'' befestigt. Die Bremsplatte 7 besteht aus einem verschleissarmen Kunststoff mit einer Shore-Härte von ca. 90A. Die Dämpfungsplatte 8 besteht aus Vulkollan® mit einer Shore-Härte von ca. 60A. Bei dieser Materialkombination kommen die für die Bremsung des Projektils günstigen Eigenschaften beider Materialien optimal zur Wirkung. Die Trägerplatte 6 ist nach außerhalb der Projektilbremse verlängert zum einfachen Herausziehen des Bremsbelags 5 wenn dessen Auswechslung nötig geworden ist.

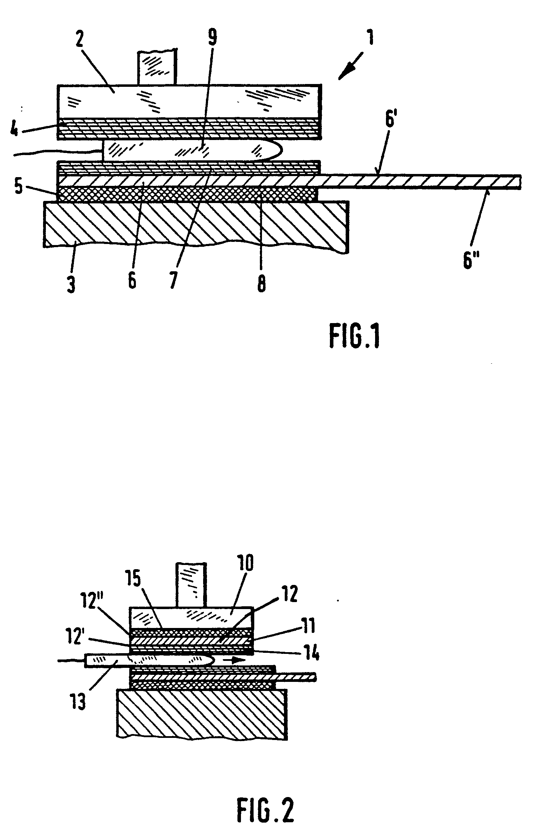

Bei der Ausführungsform nach Fig. 2 weist auch eine obere Bremsbacke 16 einen zusammengesetzten Bremsbelag 11 auf. Der Bremsbelag 11 besteht aus einer Trägerplatte 12 auf deren einem Projektil 13 zugekehrten Seite 12' eine Bremsplatte 14 und auf deren anderen Seite 12'' eine Dämpfungsplatte 15 befestigt ist. Die Bremsplatte 14 besteht wiederum aus einem verschleissarmen Kunststoff mit einer Shore-Härte von ca. 90A, die Dämpfungsplatte 15 aus Vulkollan mit einer Shore-Härte von ca. 60A.

## Patentansprüche

1. Projektilbremse für Webmaschinen, mit zwei Bremsbacken, die beide mit einem Bremsbelag versehen sind, dadurch <u>gekennzeichnet</u> daß mindestens einer der Bremsbeläge (5; 11) aus einer Trägerplatte (6; 12) besteht, auf deren dem Projektil (9; 13) zugewandten Seite (6'; 12') eine Bremsplatte (7; 14) und auf deren anderen Seite (6''; 12'') eine Dämpfungsplatte (8; 15) befestigt ist.

2. Bremse nach Anspruch 1, dadurch gekennzeichnet, daß die Bremsplatte (7; 14) eine wesentlich höhere Shore-Härte aufweist als die Dämpfungsplatte (8; 15).

3. Bremse nach Anspruch 2, dadurch gekennzeichnet, daß die Bremsplatte (7; 14) die Shore-Härte ca. 90A und die Dämpfungsplatte die Shore-Härte ca. 60A aufweist.

4. Bremse nach einem der Ansprüche 1 bis 3, dadurch gekennzeichnet, daß die Trägerplatte (6) nach außerhalb der Projektilbremse verlängert ist.

## Claims

1. A projectile brake for weaving machines, the brake having two brake shoes both having a brake lining, characterised in that at least one of the brake linings (5; 11) is in the form of a carrier plate (6; 12) and on that side (6'; 12') thereof which is near the projectile (9, 13) a brake plate (7, 14) is secured while a damping plate (8; 15) is secured to the other side (6''; 12'').

2. A brake according to claim 1, characterised in that the brake plate (7; 14) has a much higher Shore hardness than the damping plate (8; 15).

3. A brake according to claim 2, characterised in that the brake plate (7; 14) has a Shore hardness of approximately 90A and the damping plate has a Shore hardness of approximately 60A.

4. A brake according to any of claims 1-3, characterised in that the carrier plate (6) is prolonged to outside the projectile brake.

## Revendications

1. Frein de projectile pour métiers à tisser, à deux mâchoires de frein qui sont munies toutes deux d'une garniture de frein, caractérisé en ce qu'au moins l'une des garnitures de frein (5; 11) est constituée d'une plaque de support (6; 12) à laquelle sont fixées, sur sa face (6'; 12') tournée vers le projectile (9; 13), une plaquette de frein (7; 14) et sur son autre face (6''; 12''), une plaquette d'amortissement (8; 15)

2. Frein selon la revendication 1, caractérisé en ce que la plaquette de frein (7; 14) présente une dureté Shore sensiblement supérieure à celle de la plaquette d'amortissement (8; 15).

3. Frein selon la revendication 2, caractérisé en ce que la plaquette de frein (7; 14) présente une dureté Shore d'environ 90A et la plaquette d'amortissement une dureté Shore d'environ 60A.

4. Frein selon l'une des revendications 1 à 3, caractérisê en ce que la plaque (6) de support se prolonge à l'extérieur du frein de projectile.

FIG.1

FIG.2